# EUROPÄISCHE PATENTSCHRIFT

(11) **EP 1 972 832 B1**
(45) Veröffentlichungstag und Bekanntmachung des Hinweises auf die Patenterteilung: **17.08.2011**
(21) Anmeldenummer: 08102558.7
(22) Anmeldetag: 13.03.2008
(51) Int. Cl.: F16H 49/00, B62D 5/04

(54) **Wellgetriebe**
Harmonic drive
Mécanisme de direction

(30) Priorität: 17.03.2007 DE 102007012767
(43) Veröffentlichungstag der Anmeldung: 24.09.2008
(73) Patentinhaber: ZF-Lenksysteme GmbH, 73527 Schwäbisch Gmünd (DE)
(72) Erfinder: Hiller, Martin, 73527, Schwäbisch Gmünd (DE)

(56) Entgegenhaltungen:
- WO-A1-2005/054035
- GB-A- 1 128 205
- JP-U- 6 014 593
- JP-U- 58 042 452
- SU-A1- 1 106 938
- US-A1- 2002 184 968

## Beschreibung

Die Erfindung betrifft ein Wellgetriebe (harmonic drive) für einen Aktuator eines Lenksystems, insbesondere für eine Servolenkung eines Kraftfahrzeugs, nach dem Oberbegriff des Anspruchs 1 und die Verwendung eines Wellgetriebes nach Anspruch 7.

Wellgetriebe oder harmonic drives zur Drehzahlreduzierung von Servomotoren in einem Lenksystem sind bekannt und zeichnen sich dadurch aus, dass koaxial zu einem starren, kreisförmigen Stützring mit einer Innenverzahnung eine radialflexible Abrollbuchse (flex spline) angeordnet ist. In die radialflexible Abrollbuchse greift ein exzentrischer, meist ellipsenförmiger Antriebskern ein, der von einem Servomotor in Rotation versetzt wird, wobei ein oder mehrere Umfangsabschnitte einer mit einer Verzahnung versehenen Außenmantelfläche der radialflexiblen Abrollbuchse in fortlaufendem Wechsel mit einer starren Innenverzahnung des Stützrings in Eingriff gelangt. Aufgrund einer Zähnezahldifferenz zwischen dem Stützring und der radialflexiblen Abrollbuchse wird die radialflexible Abrollbuchse relativ zu dem Stützring verdreht und mit ihr beispielsweise eine drehfest verbundene Abtriebswelle. Eine Relativdrehung, die im Vergleich zu der Drehzahl des exzentrischen Antriebskems stark verringert ist, wird dadurch bewirkt.

Die gattungsgemäße SU 1106938 A zeigt und beschreibt ein Wellgetriebe mit einem aus zwei exzentrisch zueinander angeordnete Scheiben gebildeten Antriebskern, der eine radialflexible Abrollbuchse elastisch in radialer Richtung verformt. Die den Antriebskern bildenden Scheiben verformen die radialflexible Abrollbuchse in partiell fortlaufendem Wechsel auf eine in Richtung auf die Verzahnung an der Außenmantelfläche der radialflexiblen Abrollbuchse gerichtete, ballig gebildete Innenverzahnung eines Stützringes.

Die US 2002/0184968 A1 zeigt und beschreibt eine Wellengetriebevorrichtung mit geringem Gewicht, wobei ein Stützring aus einer Aluminiumlegierung, einer Kupferlegierung, einer Titanlegierungoder Magnesiumlegierung Teil der Wellengetriebevorrichtung ist. Der Stützring weist eine Verzahnung mit einer Zahnhöhe, die etwa das 1,1 bis 1,3 - fache der Höhe beträgt, wie sie bei Stützringen aus einem Eisenmetallwerkstoff üblich sind. Die Innenverzahnung weist ferner einen Plattierungsüberzug auf, der der Innenverzahnung eine ähnlich gute Zahnoberflächenfestiakeit und Abriebbeständigkeit verleiht, wie dies bei einer Verzahnung aus einem Eisenmaterial der Fall ist. Die Zähne der Innenverzahnung sind zu ihren axialen Enden hin abgerundet in Richtung auf den Stützring.

Die JP 58 042452 U zeigt und beschreibt ein Wellgetriebe, mit einem, von einem Servomotor antreibbaren, elliptischen Antriebskern, der eine radialflexible Abrollbuchse elastisch in radialer Richtung verformt. Eine Verzahnung an einer Außenmantelfläche der radialflexiblen Abrollbuchse des Wellgetriebes ist dabei partiell in fortlaufendem Wechsel mit einer starren, nicht ballig gebildeten Innenverzahnung eines Stützringes in Eingriff.

Beim Betrieb solcher Wellgetriebe, wie sie beispielsweise die DE 10 2004 034 823 A1 oder die WO 2005 05 4035 A1 beschreiben, können störende Betriebsgeräusche insbesondere durch den Verzahnungseinriff der starren Innenverzahnung des Stützrings mit der Verzahnung der radialflexiblen Abrollbuchse entstehen. Dies tritt insbesondere bei Koaxialtoleranzen der sich relativ zueinander verdrehenden Elemente des Wellgetriebes auf.

Der Erfindung liegt die Aufgabe zugrunde, ein Wellgetriebe für einen Aktuator eines Lenksystems anzugeben, dessen Betriebsgeräusch auf einfache Weise reduziert ist.

Die Aufgabe wird mit einem Wellgetriebe mit den Merkmalen des Anspruchs 1 gelöst.

Dadurch dass die Innenverzahnung des Stützrings ballig in radialer Richtung auf die Verzahnung an der Außenfläche der radialflexiblen Abrollbuchse geformt ist, wobei die Zahnkopfhöhe der Innenverzahnung um etwa 0,05 mm bis 0,3 mm über die Zahnbreite ansteigt und wieder abfällt, sind Eingriffsstörungen der Verzahnungen, die Schabgeräusche hervorrufen können, minimiert.

Bevorzugte Ausführungen ergeben sich aus den Unteransprüchen.

Die Balligkeit der Innenverzahnung des Stützrings lässt sich auf verschiedene Weise darstellen. So kann es zweckmäßig sein, eine positive Profilverschiebung über die Zahnbreite der Innenverzahnung um etwa 0,05 mm bis 0,3 mm ansteigend und wieder abfallend vorzusehen, die dieselbe Wirkung in Bezug auf eine Geräuschreduzierung des Wellgetriebes haben kann wie der Verlauf der Zahnkopfhöhe.

Bevorzugt ist der Zahnkopfhöhenverlauf oder der Verlauf der Profilverschiebung über die Zahnbreite der Innenverzahnung nicht symmetrisch, sodass die maximale Zahnkopfhöhe oder Profilverschiebung nicht bei der halben Zahnbreite der Innenverzahnung liegt. Es kann aber auch zweckmäßig sein annähernd symmetrische oder symmetrische Verläufe der betreffenden Größen über die Zahnbreite der Innenverzahnung zu wählen.

Zusätzlich wirkt eine relativ kleine gemittelte Rauhtiefe der Oberfläche der Innenverzahnung des Stützrings geräuschreduzierend, wobei diese bei etwa 6,5 µm oder weniger gewählt sein kann.

Diese Rauhtiefe lässt sich bevorzugt durch Kugelstrahlen der Oberfläche erreichen.

Die Erfindung wird nun näher anhand eines Ausführungsbeispiels beschrieben und anhand der beiliegenden Zeichnung wiedergegeben.

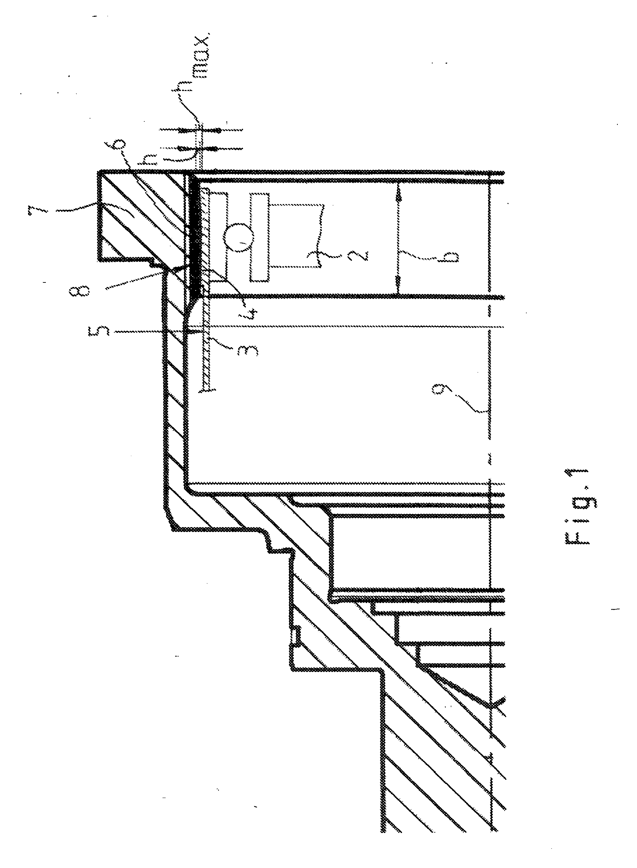

Fig. 1 zeigt einen teilweisen Längsschnitt durch ein Wellgetriebe.

In Fig. 1 ist in einem teilweisen Längsschnitt ein Wellgetriebe 1 für eine elektrische Hilfskraftlenkung eines Personenkraftwagens gezeigt. Das Wellgetriebe 1 dient zur Drehzahlreduktion eines elektrischen Servomotors, dessen Ausgangswelle mit einem exzentrischen Antriebskern 2 drehfest verbunden ist. Der exzentrische Antriebskern 2 greift axial in eine aus elastischem Stahlblech gebildete radialflexible Abrollbuchse 3 (flex-spline) ein. Er rollt bei seiner Drehung mit einem an seinem Umfang angeordneten, flexiblen Kugellager auf einem Innenumfang der radialflexiblen Abrollbuchse 3 ab. Auf ihrer Außenmantelfläche 5 weist die radialflexible Abrollbuchse 3 eine Verzahnung 4 auf, die unter Wirkung der ellipsenförmigen Aufweitung der Abrollbuchse 3 mit zwei Umfangsabschnitten in eine Innenverzahnung 6 an einer zylindrischen Stützfläche 8 eines gehäusefesten, drehfesten Stützrings 7 (circular-spline) eingreift.

Der Stützring 7 ist konzentrisch zu einer Längsachse 9 des Wellgetriebes 1 und des exzentrischen Antriebskerns 2. Der innenverzahnte Stützring 7 weist eine größere Zähnezahl seiner Innenverzahnung 6 auf, als die radialflexible Abrollbuchse 3, wodurch eine Verdrehung der radialflexiblen Abrollbuchse 3 pro Umdrehung des exzentrischen Antriebskern 2 um die Differenz der Zähnezahl erfolgt. Die Verdrehung der radialflexiblen Abrollbuchse 3 kann abgegriffen und ihre Drehzahl und Drehmoment zur Darstellung einer Lenk-Hilfskraft angewandt werden.

Um das Betriebsgeräusch des Wellgetriebes 1 zu minimieren ist die Innenverzahnung 6 durch eine allmählich über die Zahnbreite b bis zu einer maximalen Zahnkopfhöhe hₘₐₓ von 0,3 mm sich vergrößernde und wieder verkleinernde, positive Profilverschiebung ballig in Richtung auf die Verzahnung 4 an der Außenmantelfläche 5 der radialflexiblen Abrollbuchse 3 gestaltet. Zudem ist die Oberfläche der Innenverzahnung 6 durch Kugelstrahlen angerauht und weist eine gemittelte Rauhtiefe R_{z} von höchstens 6,5 µm auf.

Schabgeräusche durch Unterschnitt werden dadurch vermieden. An angerauhten Zahnflanken haftet zudem Schmierstoff besser, der die Geräuschemission eines solchen Wellgetriebes 1 zudem verringern helfen kann.

### Bezugszeichenliste

- - 1: Wellgetriebe
- - 2: Antriebskern, exzentrisch
- - 3: Abrollbuchse, radialflexibel
- - 4: Verzahnung
- - 5: Außenmantelfläche
- - 6: Innenverzahnung
- - 7: Stützring
- - 8: Stützfläche, zylindrisch
- - 9: Längsachse, v. 1
- - h: Zahnkopfhöhe
- - b: Zahnbreite
- - hₘₐₓ: Zahnkopfhöhe, größte

## Patentansprüche

1. Wellgetriebe für einen Aktuator eines Lenksystems, insbesondere für eine Servolenkung eines Kraftfahrzeugs mit einem von einem Servomotor antreibbaren, exzentrischen Antriebskern (2), der eine radialflexible Abrollbuchse (3) elastisch in radialer Richtung verformt, wobei eine Verzahnung (4) an einer Außenmantelfläche (5) der radialflexiblen Abrollbuchse (3) partiell in fortlaufendem Wechsel mit einer starren Innenverzahnung (6) eines Stützringes (7) in Eingriff gelangt und wobei die Innenverzahnung (6) des Stützringes (7) ballig in Richtung auf die Verzahnung (4) an der Außenmantelfläche (5) der radialflexiblen Abrollbuchse (3) ist, **dadurch gekennzeichnet, dass** die Zahnkopfhöhe (h) der Innenverzahnung (6) um etwa 0,05 mm bis 0,3 mm über die Zahnbreite (b) ansteigt und wieder abfällt.

2. Wellgetriebe nach Anspruch 1, **dadurch gekennzeichnet, dass** die Balligkeit der Innenverzahnung (6) durch eine positive Profilverschiebung um etwa 0,05 mm bis 0,3 mm erzeugt ist.

3. Wellgetriebe nach einem der Ansprüche 1 oder 2, **dadurch gekennzeichnet, dass** die größte Zahnkopfhöhe (hₘₐₓ) außerhalb der halben Zahnbreite (b) der Innenverzahnung (6) des Stützringes (7) liegt.

4. Wellgetriebe nach einem der Ansprüche 1 oder 2, **dadurch gekennzeichnet, dass** die größte Zahnkopfhöhe (hₘₐₓ) etwa bei der halben Zahnbreite (b) der Innenverzahnung (6) des Stützringes (7) liegt.

5. Wellgetriebe nach einem der Ansprüche 1 bis 4, **dadurch gekennzeichnet, dass** die Innenverzahnung (6) des Stützringes (7) eine gemittelte Rauhtiefe R_{z} von etwa 6,5 µm oder weniger hat.

6. Wellgetriebe nach einem der Ansprüche 1 bis 5, **dadurch gekennzeichnet, dass** die Innenverzahnung (6) des Stützringes (7) durch Kugelstrahlen gerauht ist.

7. Verwendung eines Wellgetriebes nach einem der Ansprüche 1 bis 6 in einer Hilfskraftlenkung oder in einer Fremdkraftlenkung oder in einem Überlagerungsgetriebe eines Stellantriebs in einem Personenkraftwagen oder Nutzkraftwagen.

## Claims

1. Harmonic drive for an actuator of a steering system, in particular for a servo steering system of a motor vehicle, having an eccentric drive core (2) which can be driven by a servo motor and which deforms a radially flexible rolling bush (3) elastically in the radial direction, wherein a toothing (4) on an outer lateral surface (5) of the radially flexible rolling bush (3) passes partially, in a continuously alternating fashion, into engagement with a rigid internal toothing (6) of a support ring (7), and wherein the internal toothing (6) of the support ring (7) is crowned in the direction of the toothing (4) on the outer lateral surface (5) of the radially flexible rolling bush (3), **characterized in that**, over the tooth width (b), the tooth tip height (h) of the internal toothing (6) rises by approximately 0.05 mm to 0.3 mm and falls again.

2. Harmonic drive according to Claim 1, **characterized in that** the crowning of the internal toothing (6) is generated by means of a positive profile displacement by approximately 0.05 mm to 0.3 mm.

3. Harmonic drive according to either of Claims 1 and 2, **characterized in that** the greatest tooth tip height (hₘₐₓ) lies outside the midpoint of the tooth width (b) of the internal toothing (6) of the support ring (7).

4. Harmonic drive according to either of Claims 1 and 2, **characterized in that** the greatest tooth tip height (hₘₐₓ) lies approximately at the midpoint of the tooth width (b) of the internal toothing (6) of the support ring (7).

5. Harmonic drive according to one of Claims 1 to 4, **characterized in that** the internal toothing (6) of the support ring (7) has an averaged roughness depth R_{z} of approximately 6.5 µm or less.

6. Harmonic drive according to one of Claims 1 to 5, **characterized in that** the internal toothing (6) of the support ring (7) is roughened by shot peening.

7. Use of a harmonic drive according to one of Claims 1 to 6 in a power-assisted steering system or in a power steering system or in a superposition gearing of an actuating drive in a passenger motor vehicle or utility motor vehicle.

## Revendications

1. Transmission harmonique pour un actionneur d'un système de direction, en particulier pour une direction assistée d'un véhicule automobile, comprenant un noyau d'entraînement excentrique (2) pouvant être entraîné par le servomoteur, qui déforme élastiquement une douille de roulement radialement flexible (3) dans la direction radiale, une denture (4) parvenant en prise sur une surface d'enveloppe extérieure (5) de la douille de roulement radialement flexible (3) partiellement en alternance continue avec une denture interne rigide (6) d'une bague de support (7), et la denture interne (6) de la bague de support (7) étant bombée dans la direction de la denture (4) sur la surface d'enveloppe extérieure (5) de la douille de roulement radialement flexible (3), **caractérisée en ce que** la hauteur de tête de dent (h) de la denture interne (6) augmente d'environ 0,05 mm à 0,3 mm sur la largeur de la dent (b) puis diminue à nouveau.

2. Transmission harmonique selon la revendication 1, **caractérisée en ce que** le bombement de la denture interne (6) est produit par un déplacement positif du profilé d'environ 0,05 mm à 0,3 mm.

3. Transmission harmonique selon l'une quelconque des revendications 1 ou 2, **caractérisée en ce que** la plus grande hauteur de tête de dent (hₘₐₓ) est située en dehors de la demi-largeur de dent (b) de la denture intérieure (6) de la bague de support (7).

4. Transmission harmonique selon l'une quelconque des revendications 1 ou 2, **caractérisé en ce que** la plus grande hauteur de tête de dent (hₘₐₓ) se situe approximativement à la demi-largeur de dent (b) de la denture intérieure (6) de la bague de support (7).

5. Transmission harmonique selon l'une quelconque des revendications 1 à 4, **caractérisée en ce que** la denture intérieure (6) de la bague de support (7) a une profondeur de rugosité moyenne R_{z} d'environ 6,5 µm ou moins.

6. Transmission harmonique selon l'une quelconque des revendications 1 à 5, **caractérisée en ce que** la denture interne (6) de la bague de support (7) est rendue rugueuse par grenaillage.

7. Utilisation d'une transmission harmonique selon l'une quelconque des revendications 1 à 6, dans une direction assistée ou dans une direction à force extérieure ou dans une transmission à superposition d'un entraînement de commande dans un véhicule automobile léger ou un véhicule utilitaire.
